# EUROPÄISCHE PATENTSCHRIFT

(11) **EP 2 250 300 B1**
(45) Veröffentlichungstag und Bekanntmachung des Hinweises auf die Patenterteilung: **09.04.2014**
(21) Anmeldenummer: 09713786.3
(22) Anmeldetag: 19.02.2009
(51) Int. Cl.: C23G 5/00, F01D 25/00

(54) **VERFAHREN ZUM THERMOCHEMISCHEN REINIGEN UND/ODER STRIPPEN VON TURBINENBAUTEILEN**
METHOD FOR THE THERMOCHEMICAL CLEANING AND/OR STRIPPING OF TURBINE COMPONENTS
PROCÉDÉ POUR LE NETTOYAGE ET/OU LE DÉCAPAGE THERMOCHIMIQUE D'ÉLÉMENTS DE TURBINES

(30) Priorität: 28.02.2008 DE 102008011747
(43) Veröffentlichungstag der Anmeldung: 17.11.2010
(73) Patentinhaber: MTU Aero Engines AG, 80995 München (DE)
(72) Erfinder: PILLHÖFER, Horst, 85244 Röhrmoos (DE); KOHLSCHEEN, Jörn, 28357 Bremen (DE); HEIMANN, Paul, 63477 Maintal (DE)
(86) Internationale Anmeldenummer: PCT/DE2009/000228
(87) Internationale Veröffentlichungsnummer: WO 2009/106044

(56) Entgegenhaltungen:
- EP-A- 0 209 307
- EP-A- 1 076 114
- EP-A- 1 779 955
- IE-A2- 980 638
- US-A- 4 889 589
- US-B1- 6 367 687
- MIGLIETTI W ET AL: "Advantages of fluoride ion cleaning at sub-atmospheric pressure" ENGINEERING FAILURE ANALYSIS, PERGAMON, GB, Bd. 5, Nr. 2, 1. Juni 1998 (1998-06-01), Seiten 149-169, XP002402336 ISSN: 1350-6307

## Beschreibung

Die Erfindung betrifft ein Verfahren zum thermochemischen Reinigen und/oder Strippen von Turbinenbauteilen, insbesondere von Triebwerksbauteilen.

Aus der US 5,898,994 ist bekannt, zum Entfernen von Produkten die durch Heißgaskorrosion entstanden sind, wie metallische Sulfide, ein Gemisch aus HF-Gas und Wasserstoff einzusetzen, bei dem das HF-Gas im Bereich von 10 - 15 Gew.%, insbesondere im Bereich von 13 Gew.%, liegt und der Rest Wasserstoff ist, insbesondere 87 Gew.% Wasserstoff ist.

Aus der US 5,728,227 ist ein Verfahren zum Strippen von Gasturbinenbauteilen bekannt, bei dem ein Abschnitt des Gasturbinenbauteils einem Reduktionsgas ausgesetzt wird, das mehr als 6 % Halogengas bei einer Temperatur enthält, die oberhalb von 1600°F ist.

Aus der US 5,373,986 ist ein Verfahren zum Reinigen von Rissen von Turbinenbauteilen bekannt, bei dem ein Tape über den Riss geklebt wird.

Das Dokument EP 1 779 955 A offenbart ein FIC-Verfahren zum thermochemischen Reinigen von Turbinenbauteilen, wobei ein erstes gasförmiges Gemisch aus HF und H₂ eingesetzt wird. Es werden mehrere Reinigungszyklen und Spülzyklen durchgeführt. Durch weitere Zugabe von H₂ wird der HF-Anteil zeitlich reduziert. Somit ist dieses Verfahren gattungsgleich gegenüber dem vorliegenden Verfahren.

Das Dokument MIGLIETTI W ET AL:"Advantages of fluoride ion cleaning at subatmospheric pressure" ENGINEERING FAILURE ANALYSIS, PERGAMON; GB, Bd. 5, Nr. 2, 1. Juni 1998 (1998-06-01), Seiten 149-169, XP002402336 ISSN:1350-6307 betrifft ein Verfahren zum Reinigen von Turbinenbauteilen mit HF/H₂-Gasgemischen, insbesondere von Rissen und Spalten in solchen Bauteilen.

Das Dokument IE980 638 A2 (SIFCO RES & DEV LTD [IE] SIFCO RESEARCH & DEV LIMITED [IE]) 30. Juni 1999 (1999-06-30) offenbart ein vergleichbares Verfahren zur Reinigung von Gasturbinenbauteilen mit Fluoriden und Chloriden insbesonders vor der Reparatur von Rissen.

Der Erfindung liegt nun die Aufgabe zugrunde, ein Verfahren zum thermochmischen Reinigen und oder Strippen von Turbinenbauteilen bereitszustellen, bei dem sowohl die Innenoberflächen, als auch die Außenoberflächen gründlich gereinigt werden.

Diese Aufgabe wird durch ein Verfahren gemäß Anspruch 1 gelöst. Bevorzugte Weiterbildungen sind Gegenstand der Unteransprüche.

Gemäß dem erfindungsgemäßen Verfahren ist zum thermochemischen Reinigen und/oder Strippen von Turbinenbauteilen; insbesondere Triebwerksbauteilen, vorgesehen, dass zunächst ein erstes gasförmiges Gemisch erzeugt wird, das HF und H₂ aufweist. Es kann vorgesehen sein, dass dieses erste gasförmige Gemisch aus HF und H₂ besteht. Das erste gasförmige Gemisch ist derart, dass der Volumenanteil von HF im Gemisch aus HF und H₂ im Bereich von 2,5 bis 45 Volumen-% liegt. Anschließend wird das erste gasförmige Gemisch, das HF und H₂ aufweist, auf und/oder in ein Turbinenbauteil zum Reinigen oder Strippen dieses Turbinenbauteils aufgebracht. In vorteilhafter Ausgestaltung ist der Volumenanteil von HF im Gemisch aus HF und H₂ im Bereich von 5 bis 25 Volumen-%, bevorzugt zwischen 10 und 20 Volumen-%. In vorteilhafter Ausgestaltung wird das Turbinenbauteil nach dem Erzeugen und Aufbringen des ersten gasförmigen Gemisches auf dieses Turbinenbauteil gespült. Ein solches Spülen erfolgt mittels eines zweiten gasförmigen Gemisches.

Das zweite gasförmige Gemisch ist ein Gemisch aus HF und H₂, bei dem der Volumenanteil von HF im Gemisch aus HF und H₂ erfindungsgemäß im Bereich von 0,5 bis 5 Volumen-% liegt, weiter bevorzugt im Bereich von 0,5 bis 4 Volumen-%, bevorzugt im Bereich von 1 bis 3 Volumen-%. Vorzugsweise wird das zweite gasförmige Gemisch erzeugt und auf das Turbinenbauteil aufgebracht. Es kann vorgesehen sein, dass mehrfach wiederholend ein erstes gasförmiges Gemisch erzeugt und auf das Turbinenbauteil aufgebracht wird und dann anschließend zweites gasförmiges Gemisch erzeugt und auf das Turbinenbauteil aufgebracht wird. Dieses Erzeugen und Aufbringen von erstem und zweitem gasförmigen Gemisch kann mehrfach abwechselnd wiederholt werden zum Reinigen und/oder Strippen des Turbinenbauteils. Es kann vorgesehen sein, dass der Druck des ersten gasförmigen Gemisches über die Zeit verändert wird. Es kann auch vorgesehen sein, dass der Druck des zweiten gasförmigen Gemisches über die Zeit verändert wird.

Ferner kann vorgesehen sein, dass das erste gasförmige Gemisch mit einem anderen Druck aufgebracht wird als das zweite gasförmige Gemisch. Dabei kann der Druck des zweiten gasförmigen Gemisches geringer sein als der des ersten gasförmigen Gemisches. Es kann auch vorgesehen sein, dass der Druck des zweiten gasförmigen Gemisches größer ist als der des ersten gasförmigen Gemisches.

In vorteilhafter Ausgestaltung ist vorgesehen, dass der Druck derart variiert wird, dass er teilweise im Bereich des Unterdrucks und teilweise im Bereich des Überdrucks gegeben ist. Es kann vorgesehen sein, dass Druckwechsel gestuft erfolgen oder dass Druckwechsel kontinuierlich erfolgen. Es kann auch vorgesehen sein, dass Druckwechsel lediglich im Bereich des Überdrucks stattfinden oder dass Druckwechsel lediglich im Bereich des Unterdrucks stattfinden.

Es kann vorgesehen sein, dass während des gesamten Verfahrens der Druck permanent wechselt. Es kann aber auch vorgesehen sein, dass der Druck zumindest zeitweise konstant ist.

Das Verfahren wird in vorteilhafter Ausgestaltung in einem geschlossenen System bzw. in einem geschlossenen Behältnis durchgeführt.

In besonders zu bevorzugender Ausgestaltung ist vorgesehen, dass das erste oder das zweite gasförmige Gemisch zugeführt wird und dass mittels dieses ersten und/oder zweiten gasförmigen Gemisches im Behältnis eine chemische Reaktion bewirkt wird, die ein Reinigen und/oder Strippen des Turbinenbauteils bewirkt, und dass die Reaktionsprodukte anschließend teilweise oder vollständig aus dem Behältnis abgeführt werden.

Dies kann beispielsweise so sein, dass die angesprochene chemische Reaktion insbesondere mittels des ersten gasförmigen Gemisches bewirkt wird und mittels des zweiten gasförmigen Gemisches die Reaktionsprodukte anschließend aus dem Behältnis abgeführt werden.

In besonders zu bevorzugender Ausgestaltung ist vorgesehen, dass das Turbinenbauteil ein hohles Bauteil ist. Es kann beispielsweise vorgesehen sein, dass die Innenoberfläche eines solchen hohlen Bauteils mittels des erfindungsgemäßen Verfahrens gereinigt bzw. gestrippt werden. Das Bauteil kann beispielsweise eine Schaufel sein, insbesondere Verdichterschaufel oder Turbinenschaufel. Bevorzugt ist das Bauteil eine Hohlschaufel, insbesondere hohle Turbinenschaufel.

Besonders bevorzugt ist vorgesehen, dass das thermochemische erfindungsgemäße Verfahren zum Reinigen von Innenoberflächen von hohlen Turbinenbauteilen oder von servicebedingten Beschädigungen durch Heißgaskorrosion mittels eines gesteuerten thermochemischen Gasphasenprozesses bei hohen Temperaturen durchgeführt wird.

Es kann vorgesehen sein, dass das Verfahren verschiedene Perioden bzw. Zeitabschnitte aufweist, wobei Zeitabschnitte bzw. Perioden mit hohen Volumenanteilen von Hydrogenfluorid (HF) von 2,5 bis 45 % in wasserstoffhaltiger Reaktionsatmosphäre gefolgt von Prozessabschnitten mit im wesentlichen wasserstoffhaltiger Reaktionsatmosphäre gegeben sein können.

Besonders bevorzugt wird das erfindungsgemäße Verfahren verwendet, um Metalloxide vom Gieß- und Herstellungsprozess der Bauteile vor dem Beschichten mit Pt, Pd, Zr, HF, Y, Al, Cr, Si zu entfernen bzw. Metalloxidverbindungen und/oder Metallschwefelverbindungen und / oder Deckschichten, insbesondere Keramik/Oxiddeckschichten, und / oder Wärmedämmschichten, insbesondere ZrO₂-Wärmedämmschichten bei gelaufenen Bauteilen zu entfernen.

Es kann vorgesehen sein, dass die Turbinenbauteile, an denen das erfindungsgemäße Verfahren angewendet wird, aus Nickel- und/oder Kobaltbasislegierungen bestehen, die z. B. in den Heißbereichen von Flug- und Gasturbinen verwendet werden bzw. verwendet werden können. Solche Bauteile in Turbinen haben oft geringe Wandstärken, und haben, speziell wenn sie im Einsatz mit Luft gekühlt werden, innere Kühlungsoberflächen und Kühlpassungen.

Die Ni/Co-Superlegierungen für Gasturbinen sind häufig optimiert für eine möglichst gute Kombination aus Temperaturfestigkeit, Kriechfestigkeit und Dehnwechselbelastbarkeit. Ein derartiges Bauteil kann beispielsweise in dem erfindungsgemäßen Verfahren eingesetzt werden.

Dies kann beispielsweise durch Wahl geeigneter Legierungselemente oder auch den Einsatz von gerichtet erstarrtem oder einkristallin erstarrtem Feinguss erfolgen.

Derartige Maßnahmen der Festigkeitssteigerung, wie z. B. Cr-Minderung im Grundwerkstoff und Begrenzung des Al- und/oder Ti-Gehalts können allerdings zu begrenzter Lebensdauer hinsichtlich Oxidation und Korrosion führen. Um die Oxidations- und Korrosionsbeständigkeit zu verbessern, können die Bauteile mit Al, PtAl, Cr, bzw. Si diffusionsbeschichtet werden oder mit MeCrAlY -Auflageschichten beschichtet werden. Dies kann beispielsweise im Rahmen der Neuteilfertigung aber auch im Rahmen der Überholung von bereits gelaufenen Teilen erfolgen.

In vorteilhafter Ausgestaltung lassen sich mit dem erfindungsgemäßen Verfahren Innenoberflächen und/oder Außenoberflächen von Turbinenbauteilen, insbesondere Turbinenschaufeln, zum Vorbereiten zum Beschichten im thermochemischen Prozess reinigen.

Besonders bevorzugt ist vorgesehen, dass während des erfindungsgemäßen Verfahrens eine Druckschwankung von Δp > 5 mbar und Δp < 200 mbar gegeben ist. Beispielsweise kann eine Druckschwankung während des Verfahrens gegeben sein, die im Bereich zwischen 20 und 60 mbar liegt. Es kann auch vorgesehen sein, dass eine Druckschwankung gegeben ist, die im Wesentlichen 30 mbar entspricht.

Das Verfahren kann mit hohem Flow von > 5 Volumenelementen Austauschrate pro Stunde erfolgen.

Dies bedeutet insbesondere, dass pro Stunde mindestens das Fünffache des Behältervolumens in den Behälter eingeführt und aus diesem abgeführt wird.

Es kann vorgesehen sein, dass die HF-Anteile zeitlich variiert werden. Dies kann beispielsweise durch H₂-Zugabe gesteuert werden. Es kann insbesondere auch vorgesehen sein, dass mittels des erfindungsgemäßen Verfahrens Risse gereinigt werden.

Das Behältnis, in dem das Verfahren durchgeführt werden kann, kann beispielsweise ein Volumen aufweisen, das > 0,3 m³ und < 10 m³ ist. Es kann beispielsweise vorgesehen sein, dass das Behältervolumen im Bereich von 0,5 bis 5 m³, bevorzugt zwischen 0,5 und 3 m³, besonders bevorzugt zwischen 1 und 2 m³, besonders bevorzugt im wesentlichen 1,5 m³ beträgt. In besonders bevorzugter Ausgestaltung findet während des erfindungsgemäßen Verfahrens immer eine Durchspülung statt, d. h. dass ein gasförmiges Gemisch zugeführt und Reaktionspunkte abgeführt werden. Beispielsweise kann vorgesehen sein, dass folgende Reaktion während des erfindungsgemäßen Verfahrens durchgeführt wird:

6 x HF + Al₂O₃ - 2 AlF₃ + 3 H₂O.

Die Zykluszeit ΔT kann beispielsweise im Bereich von 10 Sek. bis 10 Min. liegen. Es kann vorgesehen sein, dass die Drücke und/oder das Mischungsverhältnis des gasförmigen Gemisches während des Verfahrens verändert wird.

## Patentansprüche

1. Verfahren zum thermochemischen Reinigen und / oder Strippen von Turbinenbauteilen, insbesondere Triebwerksbauteilen, mit den Schritten:
- Erzeugen eines ersten HF und H₂ aufweisenden, gasförmigen Gemisches, bei dem der Volumenanteil von HF im Gemisch aus HF und H₂ im Bereich von 2,5 bis 45 Volumen-% liegt;
- Aufbringen des ersten HF und H₂ aufweisenden, gasförmigen Gemisches auf und / oder in ein Turbinenbauteil zum Reinigen und / oder Strippen dieses Turbinenbauteils, und
- Spülen des Turbinenbauteils nach dem Erzeugen und Aufbringen des ersten gasförmigen Gemisches auf das Turbinenbauteil wobei das Spülen des Turbinenbauteils mittels eines zweiten gasförmigen Gemisches erfolgt wobei das zweite gasförmige Gemisch HF und H₂ aufweist, **dadurch gekennzeichnet, dass** der Anteil von HF im zweiten Gemisch aus HF und H₂ im Bereich von 0,5 bis 5 Volumen-% liegt.

2. Verfahren nach Anspruch 1, **dadurch gekennzeichnet, dass** der Volumenanteil von HF im Gemisch aus HF und H₂ im Bereich von 5 bis 25 Volumen-% liegt.

3. Verfahren nach Anspruch 1 oder 2 **dadurch gekennzeichnet, dass** zum Reinigen und / oder Strippen des Turbinenbauteils mehrfach abwechselnd das erste und das zweite gasförmige Gemisch auf und / oder in dieses Turbinenbauteil aufgebracht wird.

4. Verfahren nach einem der vorangehenden Ansprüche, **dadurch gekennzeichnet, dass** - insbesondere zum Spülen - der Druck des ersten und / oder zweiten gasförmigen Gemisches über die Zeit verändert wird.

5. Verfahren nach einem der vorangehenden Ansprüche, **dadurch gekennzeichnet, dass** dieses Verfahren in einem Behältnis bzw. in einem geschlossenen System durchgeführt wird.

6. Verfahren nach einem der vorangehenden Ansprüche, **dadurch gekennzeichnet, dass** dem Behältnis das erste und / oder das zweite gasförmige Gemisch zugeführt wird und dass mittels dieses ersten und / oder zweiten gasförmige Gemisches im Behältnis eine chemische Reaktion bewirkt wird, die ein Reinigen und / oder Strippen des Turbinenbauteils bewirkt, und dass die Reaktionsprodukte anschließend teilweise oder vollständig aus dem Behältnis abgeführt werden.

## Claims

1. Method for thermochemically cleaning and/or stripping turbine components, in particular engine components, having the steps:
- production of a first gaseous mixture containing HF and H₂, in which the proportion of HF by volume in the mixture consisting of HF and H₂ lies in the range of 2.5 to 45 % by volume;
- application of the first gaseous mixture containing HF and H₂ to and/or into a turbine component for cleaning and/or stripping this turbine component; and
- rinsing of the turbine component after the production and application of the first gaseous mixture to the turbine component, wherein the rinsing of the turbine component is effected by means of a second gaseous mixture, wherein the second gaseous mixture contains HF and H₂, **characterised in that** the proportion of HF in the second mixture of HF and H₂ lies in the range of 0.5 to 5 % by volume.

2. Method according to claim 1, **characterised in that** the proportion of HF by volume in the mixture of HF and H₂ lies in the range of 5 to 25 % by volume.

3. Method according to claim 1 or 2, **characterised in that** in order to clean and/or strip the turbine component the first and the second gaseous mixture are applied repeatedly alternately to and/or into this turbine component.

4. Method according to one of the preceding claims, **characterised in that** - in particular for rinsing - the pressure of the first and/or second gaseous mixture is varied over time.

5. Method according to one of the preceding claims, **characterised in that** this method is carried out in a container or in a closed system.

6. Method according to one of the preceding claims, **characterised in that** the first and/or the second gaseous mixture are/is supplied to the container, and **in that** by means of this first and/or second gaseous mixture a chemical reaction is brought about in the container that brings about cleaning and/or stripping of the turbine component, and **in that** the reaction products are subsequently partly or completely removed from the container.

## Revendications

1. Procédé pour le nettoyage et/ou le décapage thermochimique d'éléments de turbines, en particulier d'éléments de moteur, comportant les étapes de :
- production d'un premier mélange à l'état gazeux présentant du HF et du H₂, dans lequel la proportion en volume de HF dans le mélange de HF et de H₂ se situe dans une plage de 2,5 à 45 % en volume;
- application du premier mélange à l'état gazeux présentant du HF et du H₂ sur et/ou dans un élément de turbine pour nettoyer et/ou décaper cet élément de turbine ; et
- rinçage de l'élément de turbine après la production et l'application du premier mélange à l'état gazeux sur l'élément de turbine, le rinçage de l'élément de turbine s'effectuant au moyen d'un deuxième mélange à l'état gazeux, le deuxième mélange à l'état gazeux présentant du HF et du H₂, **caractérisé en ce que** la proportion de HF dans le deuxième mélange de HF et de H₂ se situe dans une plage de 0,5 à 5 % en volume.

2. Procédé selon la revendication 1, **caractérisé en ce que** la proportion en volume de HF dans le mélange de HF et de H₂ se situe dans une plage de 5 à 25 % en volume.

3. Procédé selon la revendication 1 ou 2, **caractérisé en ce que**, pour le nettoyage et/ou le décapage de l'élément de turbine, le premier et le deuxième mélange à l'état gazeux sont appliquées plusieurs fois alternativement sur et/ou dans cet élément de turbine.

4. Procédé selon l'une des revendications précédentes, **caractérisé en ce que**, en particulier pour le rinçage, la pression du premier et/ou du deuxième mélange à l'état gazeux est modifiée au cours du temps.

5. Procédé selon l'une des revendications précédentes, **caractérisé en ce que** ce procédé est réalisé dans un conteneur ou dans un système fermé.

6. Procédé selon l'une des revendications précédentes, **caractérisé en ce que** le premier et/ou le deuxième mélange à l'état gazeux est acheminé au conteneur et **en ce que**, au moyen de ce premier et/ou deuxième mélange à l'état gazeux, une réaction chimique se produit dans le conteneur, entraînant un nettoyage et/ou un décapage de l'élément de turbine, et **en ce que** les produits réactionnels sont ensuite évacués partiellement ou complètement du conteneur.
